# EUROPÄISCHE PATENTSCHRIFT

(11) **EP 1 007 385 B1**
(45) Veröffentlichungstag und Bekanntmachung des Hinweises auf die Patenterteilung: **16.01.2002**
(21) Anmeldenummer: 98943828.8
(22) Anmeldetag: 04.08.1998
(51) Int. Cl.: B60N 2/06

(54) **Sitzführung zur längspositionsverstellbaren Halterung eines Fahrzeugsitzes**
Seat guide for fixing the adjustable longitudinal position of an automobile seat
Guide destiné à la fixation d'un siège de véhicule et au réglage de la position longitudinale de ce siège

(30) Priorität: 03.09.1997 DE 19738383
(43) Veröffentlichungstag der Anmeldung: 14.06.2000
(73) Patentinhaber: Johnson Controls GmbH, 51399 Burscheid (DE)
(72) Erfinder: MÜNCH, Ingo, D-42399 Wuppertal (DE)
(74) Vertreter: Zapf, Christoph, Dipl.-Ing.
(86) Internationale Anmeldenummer: EP9804835
(87) Internationale Veröffentlichungsnummer: WO9911486

(56) Entgegenhaltungen:
- EP-A- 0 090 235
- EP-A- 0 114 740
- DE-A- 4 201 354
- DE-A- 4 333 552
- DE-A- 19 519 153
- DE-A- 19 532 256

## Beschreibung

Die vorliegende Erfindung betrifft eine Sitzführung zur Halterung eines Fahrzeugsitzes und zu dessen Positionsverstellung in Richtung einer Verstellachse, mit zwei parallel zur Verstellachse angeordneten Führungsschienen sowie mit mit den Führungsschienen relativbeweglich und dabei rollend zusammenwirkenden Trägerrollkörpern zur vertikalen Lastabstützung, wobei ein Ausgleich von seitlichen, zwischen den Führungsschienen auftretenden Maßtoleranzen vorgesehen und zur seitlichen Abstützung in Richtung einer zur Verstellachse und zu den Führungsschienen im wesentlichen senkrecht verlaufenden Querachse Seitenführungsmittel. vorgesehen sind, die mit Rollreibung relativbeweglich mit den Führungsschienen zusammenwirken und relativbeweglich und rollend mit den Führungsschienen zusammenwirkende Führungsrollkörper aufweisen, wobei die Trägerrollkörper und die Führungsrollkörper jeweils an einem von zwei am Fahrzeugsitz befestigbaren Trägerelementen gehaltert sind.

Bei derartigen Sitzführungen ergibt sich die besondere Problematik, daß aufgrund einer Vielzahl von Blechteilen, aus denen die Fahrzeugkarosserie gefertigt ist, große Maßtoleranzen auftreten, so daß der seitliche, in Richtung einer horizontalen Fahrzeugquerachse (Y-Achse) gemessene Abstand der Sitz-Führungsteile sogar im Bereich von mehreren Millimetern differieren kann. Ferner sind auch Maßtoleranzen bei der Fertigung des Sitzgestells nicht zu vernachlässigen. Alle diese Toleranzen müssen ausgeglichen werden, um eine einwandfreie Funktion der Sitzführung, d.h. vor allem ein klemmfreies Verschieben zur Positionsverstellung, zu gewährleisten. Diese Problematik ist vor allem bei Sitzbänken von besonderer Bedeutung, da es aufgrund der großen Breite (Spannweite zwischen den seitlichen Führungen) auch zu Kippbewegungen um eine Vertikalachse (Z-Achse) und zu einem daraus resultierenden Festklemmen der Sitzbank kommen kann.

Eine Sitzführung ähnlich der eingangs genannten Art ist aus der DE 195 47 034 A1 bekannt. Dabei laufen auf jeder von zwei Führungsschienen zwei doppelkegelförmige Rollkörper (Spurrollen), die zum Toleranzausgleich zumindest auf einer Seite in Loslagerungen axialverschiebbar geführt sind. Diese Sitzführung ist grundsätzlich gut funktionsfähig, es hat sich aber in der Praxis gezeigt, daß diese Anordnung nur relativ kostenintensiv zu verwirklichen ist, weil die Lagerstellen bestimmten Kräften standhalten müssen, die vor allem im Crashfall recht hoch sein können. Daher müssen spezielle Lagermittel eingesetzt werden. Es hat sich weiterhin gezeigt, daß auch mit dieser bekannten Anordnung noch kein absolut klemmfreies Einstellen der Sitzbank in Längsrichtung zu erreichen ist.

Die DE 43 30 133 A1 beschreibt eine weitere Schienenführung für Fahrzeugsitze, die allerdings als Gleitführung mit in den Führungsschienen verschiebbar geführten Gleitstücken aus Kunststoff ausgebildet ist. Hierbei ist zum Toleranzausgleich vorgesehen, daß sitzseitig angeordnete Tragstücke zum einen in ihrer Lagerung um ihre Längsachse verschwenkbar und zum anderen in Richtung ihrer Längsachse zumindest an einer Seite des Sitzes verschiebbar angeordnet sind. Diese Tragstücke weisen an ihren Außenabschnitten Gleitstücke aus Kunststoff auf, die in den Längsführungsschienen gleiten.

Die DE 39 20 077 A1 behandelt ebenfalls einen in Schienen geführten Fahrzeugsitz, wobei der Sitz auf Gleitfüßen in den Schienen geführt ist. Dabei ist zur Vermeidung von Klappergeräuschen eine Spanneinrichtung vorgesehen, die auch ein infolge von Bautoleranzen bedingtes seitliches Spiel in den Schienen ausgleichen soll. Diese Spanneinrichtung weist einen in einer sitzfesten Halterung gelagerten Bolzen auf, der unter der Kraft einer Feder an einer der Schienen anliegt.

Schließlich ist in der DE-OS 1 680 269 eine Vorrichtung zur Befestigung eines Sitzes an einem Boden beschrieben. Dabei handelt.es sich um eine Gleitführung mit ineinandergreifenden Schienen, wobei ein Schienenpaar vorgesehen ist, dessen Schienen ohne wesentliches Spiel quer zur Schienenlängsachse ineinandergreifen, während die Schienen aller übrigen Schienenpaare in Querrichtung des Sitzes relativ zueinander verschiebbar sind. Hierdurch sollen Fertigungstoleranzen durch eine Verschiebung der Schienen der letztgenannten Paare in Querrichtung des Sitzes ausgeglichen werden.

Eine Sitzführung gattungsgemäßen Art ist aus der DE 195 19 153 A1 bekannt, die eine Führung für verstellbare Fahrzeugsitze beschreibt, die wenigstens eine Führungsschiene mit C-förmigen Außenprofil und mit endseitigen nach innen - aufeinanderzu gerichteten - Schenkeln aufweist. In dieser Führungsschiene ist. ein mit dem Fahrsitz verbundenes Führungselement aufgenommen. Die Führungsschiene besitzt zwei Führungsbereiche, welche durch einen an der Führungsschiene innenseitig angeordneten Mittelsteg voneinander getrennt sind. In jeweils einem der Führungsbereiche rollt jeweils eine Laufrolle, die beidseitig des Mittelsteges vorgesehen sind, ab. Die Laufrollen sind an einem gemeinsamen, mit der Sitzhalterung verbundenen Verbindungsteil drehbar gelagert befestigt. Bei dieser bekannten Sitzführung kann ein Ausgleich von seitlichen Toleranzen durch einen gewissen axialen Freiraum in der Führungsschiene erfolgen. Insbesondere übergreift ein Führungsabschnitt eines oberen Führungsbereiches dabei die Laufrolle berührungslos.

Der vorliegenden Erfindung liegt die Aufgabe zugrunde, eine Sitzführung der gattungsgemäßen Art zu schaffen, die mit kostengünstigen Mitteln eine stets einwandfreie, insbesondere klemmfreie Funktion bei der Längspositionsverstellung gewährleistet.

Erfindungsgemäß wird dies dadurch erreicht, daß die Führungsrollkörper über jeweils ein gesondertes, an jedem Trägerelement befestigtes Tragteil gehaltert sind, wobei das Trägerelement derart am Fahrzeugsitz und/oder das Tragteil derart an dem zugehörigen Trägerelement befestigbar ist, daß es bereichsweise zum Ausgleich der seitlichen, zwischen den Führungsschienen auftretenden Maßtoleranzen elastisch verformbar ist.

Durch die erfindungsgemäße Ausgestaltung tritt bei den Verstellbewegungen des Fahrzeugsitzes ausschließlich Rollreibung auf, da es sich um eine reine Rollenführung handelt. Sollte es beim Verstellen der Längsposition zu einem Verkanten des Sitzes, d.h. zu einem Verkippen um seine vertikale Achse, kommen, so gelangt jeweils zumindest ein Teil der seitlichen Führungsrollenkörper zur Anlage an jeweils einer zugeordneten seitenführungsfläche der jeweiligen Führungsschiene, so daß auch hier nur eine sehr geringe Rollreibung auftritt, wodurch eine Hemmung der Sitzverstellung oder gar ein Festklemmen sicher vermieden wird.

In einer vorteilhaften Ausgestaltung der Erfindung sind jeder der beiden Führungsschienen mindestens zwei in Richtung der Verstellachse beabstandete Führungsrollkörper zugeordnet. Der Abstand der beiden Führungsrollkörper jedes seitlichen Paares sollte dabei in Abhängigkeit von den baulichen Gegebenheiten so groß wie möglich gewählt werden. Hierdurch eignet sich die erfindungsgemäße Sitzführung auch besonders gut für breite Sitzbänke, beispielsweise Zweier- oder Dreiersitzbänke. Im Falle eines eventuellen Verkippens erfolgt stets eine Anlage von jeweils zwei diagonal gegenüberliegenden Führungsrollkörpern an den beiden Führungsschienen, so daß ein Festklemmen gänzlich ausgeschlossen ist.

Die erfindungsgemäße Sitzführung läßt sich mit preiswerten Mitteln realisieren, indem als Rollkörper übliche Wälzlager verwendet werden können.

Auch der Ausgleich von seitlichen Maßtoleranzen ist problemlos erreichbar, weil die Rollkörper mit einem bewußten, zulässigen Seitenspiel in den Führungsschienen geführt sein können. Hierdurch sind zwar geringfügige Seitenbewegungen des Sitzes möglich, diese werden aber vorteilhafterweise über die Führungsrollkörper der Seitenführungsmittel begrenzt, ohne daß hierdurch beim Verstellen eine nennenswerte zusätzliche Reibung auftreten könnte.

In weiterer vorteilhafter Ausgestaltung der Erfindung sind Ausgleichsmittel zur relativen Abstützung des Sitzes in einer der Richtung der Lastabstützung über die Trägerrollkörper entgegengesetzten Richtung vorgesehen. Hierzu können grundsätzlich Gleitführungen eingesetzt werden, jedoch ist es besonders vorteilhaft, wenn die Ausgleichsmittel auf der Seite jeder Führungsschiene mindestens einen Ausgleichsrollkörper zur Auflage und zum Abrollen auf einer der Richtung der Lastabstützung entgegengesetzten Stützfläche der Führungsschiene aufweisen. Aufgabe dieser Ausgleichsmittel ist es, Kippbewegungen des Sitzes um seine Querachse zu verhindern bzw. auf ein Minimum zu verringern.

Zur Vermeidung von eventuellen Geräuschen, insbesondere Klappergeräuschen während der Fahrt, ist es vorteilhaft, die jeweils vorgesehenen Rollkörper mit jeweils einem aus einem elastischen Material bestehenden Laufring zu versehen. Lediglich bei den Trägerrollkörpern könnte eventuell davon abgesehen werden, weil diese stets gewichtsbedingt an der Führungsschiene anliegen.

Im Falle von hohen Belastungen des Fahrzeugsitzes, wie sie vor allem bei einem Unfall auftreten können, sind eventuell die vorgesehenen Rollkörper allein nicht in der Lage, die Wirkkräfte aus dem Fahrzeugsitz über die Führungsschienen in den Fahrzeugboden einzuleiten. Um in diesem Fall eine sichere Abstützung des Fahrzeugsitzes zu gewährleisten, sind in bevorzugter Ausgestaltung der Erfindung spezielle Sicherungsmittel zur direkten Abstützung des Fahrzeugsitzes an ortsfesten Karosserieteilen im Falle von insbesondere crashbedingten Verformungen im Bereich der Rollkörper vorgesehen. Diese Sicherungsmittel können durch mit Spielabstand ineinandergreifende stegartige Fangprofilabschnitte der Sitzführungskomponenten gebildet sein, wobei diese Fangprofilabschnitte im Falle von unfallbedingten Verformungen im Bereich der Rollkörper zur Anlage aneinander gelangen. Durch diese Abstützung wird sicher verhindert, daß der Fahrzeugsitz aus seiner Verankerung gerissen werden könnte.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung genauer erläutert werden. Dabei zeigen:
- Fig. 1: eine einer Sitzseite zugeordnete Hälfte einer erfindungsgemäßen Sitzführung in einer perspektivischen Explosionsdarstellung ihrer Einzelteile,
- Fig. 2: einen vergrößerten Querschnitt durch den Bereich der Führungsschiene in der Ebene II-II gemäß Fig. 1,
- Fig. 3: einen Querschnitt der gesamten Sitzführung (mit linker und rechter Teilführung) in der Ebene III-III gemäß Fig. 1,
- Fig. 4: einen Querschnitt durch die Sitzführung in der Ebene IV-IV gemäß Fig. 1,
- Fig. 5: einen entsprechenden Querschnitt in der Ebene V-V gemäß Fig. 1,
- Fig. 6: eine vergrößerte Schnittdarstellung der in Fig. 3 mit VI gekennzeichneten Hälfte (Teilführung) der Sitzführung,
- Fig. 7: eine vergrößerte Darstellung der in Fig. 4 mit VII gekennzeichneten Sitzführungshälfte,
- Fig. 8: eine vergrößerte Darstellung der Ansicht VIII gemäß Fig. 5,
- Fig. 9: einen vergrößerten Querschnitt durch die Hälfte der Sitzführung in der Ebene IX-IX gemäß Fig.1.

In den verschiedenen Figuren der Zeichnung sind gleiche Teile stets mit den gleichen Bezugszeichen versehen und werden daher in der Regel jeweils nur einmal beschrieben.

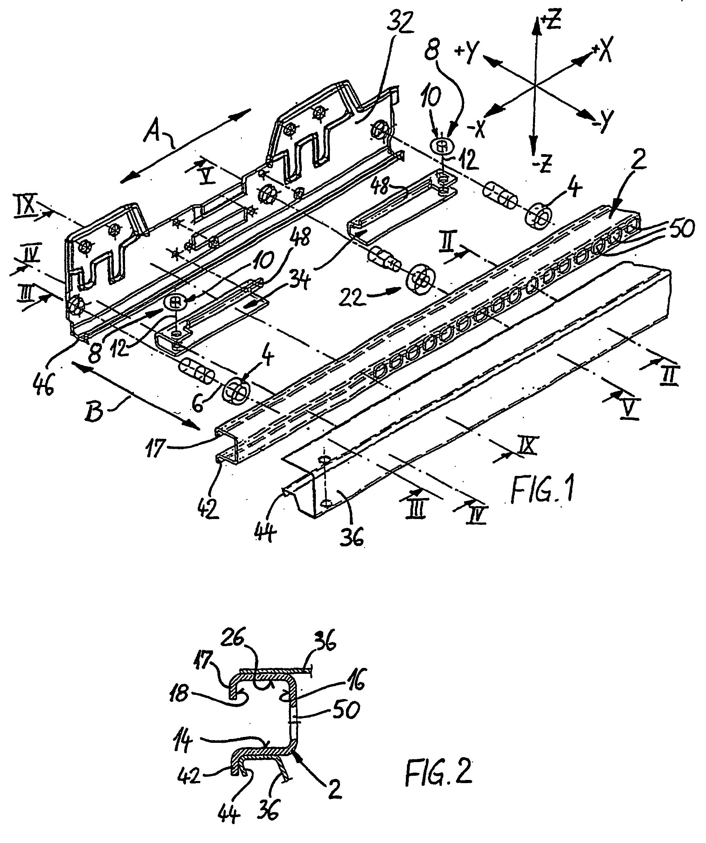

Wie sich zunächst aus Fig. 1 ergibt, dient eine erfindungsgemäße Sitzführung dazu, einen selbst nicht dargestellten Fahrzeugsitz, insbesondere eine Sitzbank, einerseits im Fahrzeug zu haltern und andererseits insgesamt bezüglich seiner Position linear in Richtung einer Verstellachse A verstellen zu können. In Fig. 1 ist zusätzlich das in der Kfz-Technik übliche dreidimensionale Bezugssystem mit den Achsen X, Y und Z veranschaulicht, wobei X die horizontale Längsachse, Y die horizontale Querachse und Z die Vertikalachse des Fahrzeugs bedeuten. Üblicherweise entspricht die Verstellachse A des Sitzes dem Verlauf der X-Achse (Sitz-Längsverstellung).

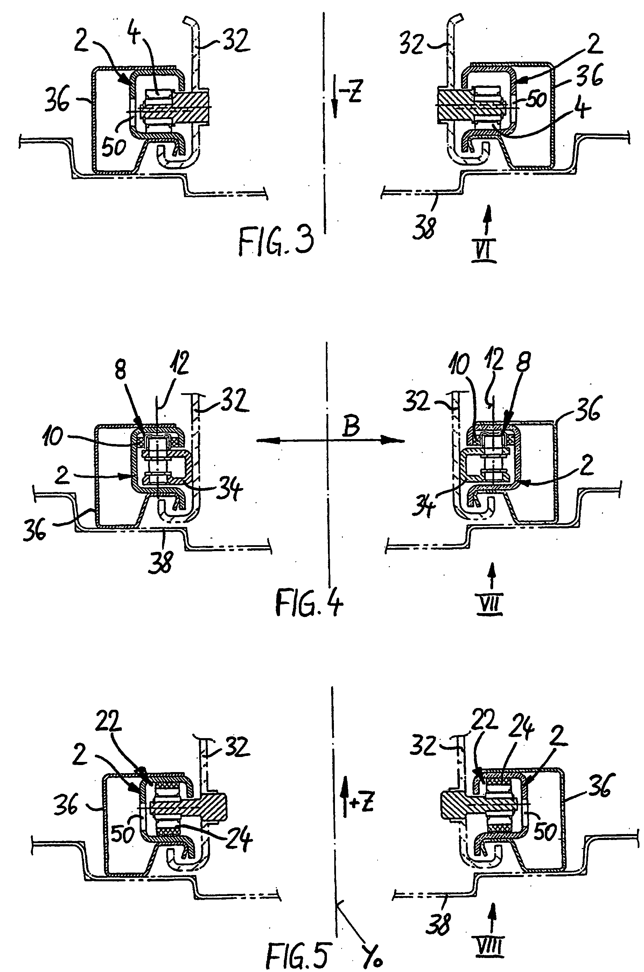

Gemäß Fig. 3 bis 5 weist die Sitzführung zwei spiegelsymmetrisch und parallel zur Verstellachse A angeordnete Führungsschienen 2 auf. Zur vertikalen Lastabstützung in Richtung -Z sind Trägerrollkörper 4 vorgesehen, die mit den Führungsschienen 2 relativbeweglich und dabei rollend zusammenwirken (vgl. Fig. 1, 3 und 6). Dabei sind jeder der beiden Führungsschienen 2 (mindestens) zwei in Richtung der Verstellachse A beabstandete Trägerrollkörper 4 zugeordnet, die um zur Verstellachse A senkrechte, d.h. zur Y-Achse parallele Rotationsachsen 6 drehbar gelagert sind. Damit ruht der Fahrzeugsitz auf (mindestens) vier Trägerrollkörpern 4.

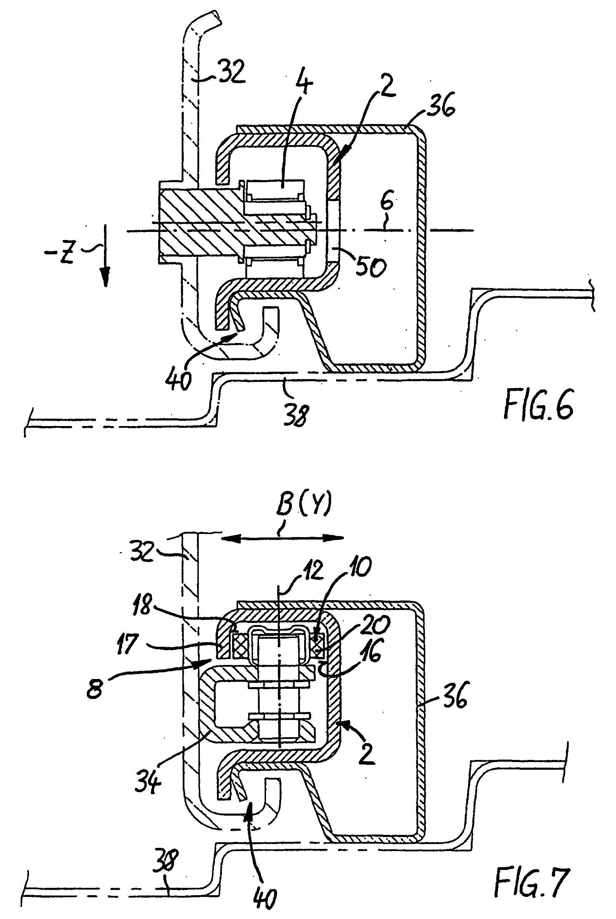

Wie sich nun aus Fig. 1, 4 und 7 ergibt, sind erfindungsgemäß zur seitlichen Abstützung in Richtung einer zur Verstellachse A und zu den Führungsschienen 2 im wesentlichen senkrecht verlaufenden Querachse B - die in der Regel dem Verlauf der Fahrzeug-Querachse Y entspricht - Seitenführungsmittel 8 vorgesehen. Diese erfindungsgemäßen Seitenführungsmittel 8 weisen Führungsrollkörper 10 auf, die relativbeweglich und rollend mit den Führungsschienen 2 zusammenwirken. Dabei sind zweckmäßigerweise jeder der beiden Führungsschienen 2 (mindestens) zwei in Richtung der Verstellachse A voneinander beabstandete Führungsrollkörper 10 zugeordnet (s. insbesondere Fig. 1). Jeder Führungsrollkörper 10 ist gemäß Fig. 4 und 7 um eine zur Verstellachse A und zur Querachse B jeweils etwa senkrechte - und damit dem Verlauf der Y-Achse entsprechende - Rotationsachse 12 drehbar gelagert. Die Führungsrollkörper 10 sind vorzugsweise relativ zu den Trägerrollkörpern 4 in die der Lastabstützrichtung entgegengesetzte Richtung (nach "oben") versetzt angeordnet (vgl. Fig. 3 und 4).

Gemäß Fig. 2 ist jede Führungsschiene 2 als im Querschnitt im wesentlichen C-förmiges Rechteckprofil ausgebildet, wobei diese die Führungsschienen 2 bildenden Rechteckprofile auf ihren einander zugekehrten Seiten offen ausgebildet sind. Zur Auflage der Trägerrollkörper 4 weist jede Führungsschiene 2 eine innenseitige Trägerlauffläche 14 auf. Für die erfindungsgemäßen Führungsrollkörper 10 weist jede Führungsschiene 2 (gemäß Anspruch 5) auf ihrer der offenen Seite gegenüberliegenden Innenseite eine erste Seitenführungsfläche 16 sowie vorzugsweise gegenüberliegend eine durch einen auf der offenen Seite abgewinkelten Stegabschnitt 17 gebildete zweite Seitenführungsfläche 18 auf. Wie am besten in Fig. 7 erkennbar ist, sind die Führungsrollkörper 10 in den Führungsschienen 2 jeweils mit einem seitlichen Bewegungsspiel zwischen den Seitenführungsflächen 16 und 18 geführt, so daß sie bei Verlagerungen des Sitzes jeweils nur an einer der beiden Seitenführungsflächen 16 oder 18 zur Anlage gelangen können.

Wie dargestellt, sind die Führungsrollkörper 10 als Rollen, insbesondere übliche Wälzlager, mit jeweils einem Laufring 20 ausgebildet, wobei der Laufring bevorzugt aus einem elastischen Material, wie Kunststoff, besteht. Hierdurch können spielbedingte Klappergeräusche wirksam vermieden bzw. reduziert werden. Entsprechend der Darstellung in.Fig. 1 können die Führungsrollkörper 10 jeweils eine leicht ballig (konvex) ausgebildete Lauffläche aufweisen.

In dem dargestellten, bevorzugten Ausführungsbeispiel der Erfindung sind die Führungsschienen 2 zur fahrzeugseitig ortsfesten Anordnung vorgesehen, während die Trägerrollkörper 4 und die Führungsrollkörper 10 am Fahrzeugsitz befestigbar sind. Hieraus ergibt sich, daß die Trägerrollkörper 4 "unten" auf der Trägerlauffläche 14 aufliegen.

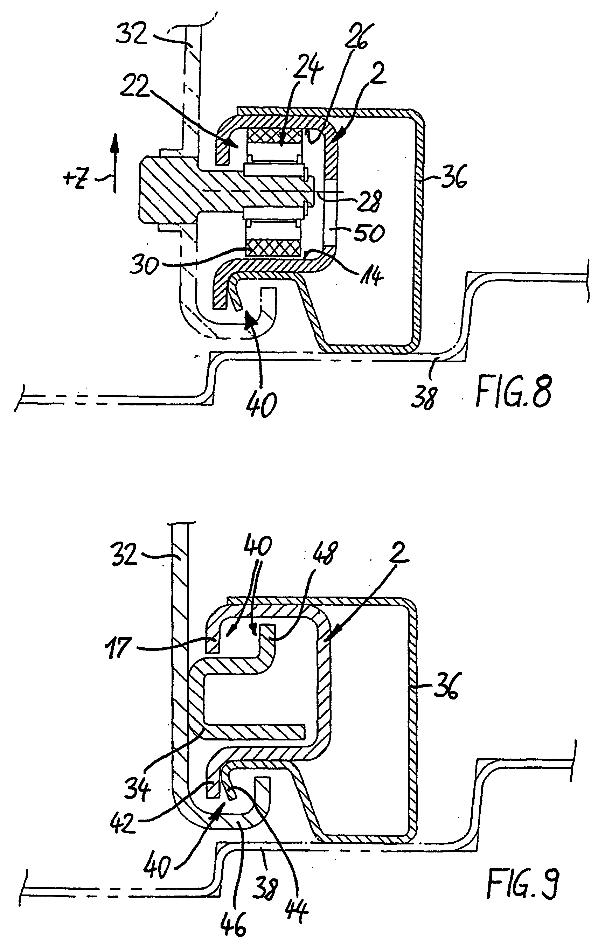

Wie sich nun aus Fig. 1, 5 und 8 ergibt, sind bevorzugt zusätzliche Ausgleichsmittel 22 zur relativen Abstützung des Fahrzeugsitzes in einer der Richtung der Lastabstützung entgegengesetzten Richtung vorgesehen. Bei der dargestellten Ausführungsform mit ortsfest im Fahrzeug angeordneten Führungsschienen 2 stützen sich die Ausgleichsmittel 22 vertikal nach "oben", d.h. in +Z-Richtung, in der Führungsschiene 2 ab. Vorzugsweise ist hierzu auf der Seite jeder Führungsschiene 2 (mindestens) ein Ausgleichsrollkörper 24 vorgesehen, der an einer der Trägerlauffläche 14 gegenüberliegenden Stützfläche 26 der jeweiligen Führungsschiene 2 anliegt und bei der Sitzverstellung darauf abrollt. Dabei ist zwischen jedem Ausgleichsrollkörper 24 und der Trägerlauffläche 14 ein Spielabstand vorhanden, siehe insbesondere Fig. 8. Jeder Ausgleichsrollkörper 24 ist um eine zur Querachse B - und auch zur Y-Achse - etwa parallele Rotationsachse 28 drehbar gelagert. Zweckmäßigerweise ist auch jeder Ausgleichsrollkörper 24 als Rolle, insbesondere Wälzlager, mit einem vorzugsweise aus einem elastischen Material bestehenden Laufring 30 ausgebildet.

Wie sich nun weiterhin aus Fig. 1 ergibt, sind alle vorgesehenen Rollkörper 4, 10, 24 jeweils an einem von zwei am Fahrzeugsitz befestigbaren Trägerelementen 32 gehaltert. Diese Trägerelemente 32 sind bevorzugt als Blechformteile ausgebildet. Die Trägerrollkörper 4 und die bevorzugt vorgesehenen Ausgleichsrollkörper 24 sind zweckmäßigerweise unmittelbar über Achsbolzen an dem jeweiligen Trägerelement 32 gelagert. Die Führungsrollkörper 10 sind über jeweils ein gesondertes, an dem Trägerelement 32 befestigtes, insbesondere aus Blech gebildetes Tragteil 34 gehaltert. Jedes Tragteil 34 ist im wesentlichen U-förmig ausgebildet, wobei sich Achsöffnungen durch zwei parallele U-Schenkel erstrecken, und in diesen Achsöffnungen sind gemäß Fig. 4 und 7 jeweils die Führungsrollkörper 10 über Achsbolzen gelagert.

Erfindungsgemäß ist jedes Trägerelement 32 derart am Fahrzeugsitz befestigbar, daß es bereichsweise zum Ausgleich von seitlichen, zwischen den Führungsschienen 2 auftretenden Maßtoleranzen elastisch verformbar ist. Dies wird im dargestellten Ausführungsbeispiel vorteilhafterweise dadurch erreicht, daß jedes Trägerelement 32 nur in seinem vertikal oberen Bereich befestigt wird, so daß es sich im übrigen, unteren Bereich zusammen mit den Rollkörpern in Richtung der Querachse B elastisch verformen läßt. Alternativ oder zusätzlich kann auch vorgesehen sein, daß jedes Tragteil 34 an dem zugehörigen Trägerelement 32 entsprechend derart befestigt ist, daß es bereichsweise zum Ausgleich von seitlichen Maßtoleranzen zwischen den Führungsschienen 2 elastisch verformbar ist. Speziell wird dies im dargestellten Ausführungsbeispiel dadurch erreicht, daß jedes Tragteil 34 nur in seinem dem jeweiligen Führungsrollkörper 10 gegenüberliegenden Endbereich an dem Trägerelement 32 befestigt wird. Hierdurch ist das den Führungsrollkörper 10 aufweisende Ende des Tragteils 34 relativ zu dem Trägerelement 32 elastisch beweglich.

Was nun die Befestigung der Führungsschienen 2 betrifft, so ist bevorzugt jede Führungsschiene 2 in einer fahrzeugseitig ortsfest montierbaren Tragschiene 36 befestigt. Gemäß Fig. 3 bis 9 werden die Tragschienen 36 an einem nur bereichsweise angedeuteten Fahrzeugboden 38 befestigt, und zwar im Bereich von Längsholmen (auch Schweller genannt), eventuell auch im Bereich eines Mitteltunnels. Die Tragschienen 36 weisen ein etwa C-förmiges Profil auf, deren offene Seite zur Symmetriemittelachse des Fahrzeugs (senkrechte Längsbezugsebene Y₀, s. Fig. 3 bis 5) gerichtet ist.

Wie sich vor allem aus Fig. 1, 2 und 9 ergibt, sind bevorzugt zusätzliche Sicherungsmittel 40 vorgesehen, die zur direkten Abstützung des Fahrzeugsitzes an ortsfesten Karosserieteilen im Falle von insbesondere unfallbedingten Verformungen im Bereich der Rollkörper 4, 10, 24 dienen. Bei diesen Sicherungsmitteln 40 handelt es sich im dargestellten Beispiel um mit Spielabstand ineinandergreifende, stegartige Fangprofilabschnitte der Trägerelemente 32 und/oder der Tragteile 34 einerseits sowie der Führungsschienen 2 und gegebenenfalls der Tragschienen 36 andererseits. Gemäß Fig. 9 weist die Führungsschiene 2 auf ihrer offenen Seite dem Stegabschnitt 17 gegenüberliegend einen von diesem weg weisend abgewinkelten Randsteg 42 auf. In diesem Bereich besitzt vorzugsweise auch die Tragschiene 36 einen entsprechenden Randsteg 44. Hierbei weist das Trägerelement 32 einen U-förmig um 180° umgewinkelten Randbereich 46 auf, der die Randstege 42, 44 mit Spielabstand unter- und hintergreift. Zusätzlich weisen die Tragteile 34 jeweils einen umgewinkelten Steg 48 auf, der mit Spielabstand den die zweite Seitenführungsfläche 18 bildenden Stegabschnitt 17 der Führungsschiene 2 hintergreift. Auf diese Weise werden Fangprofilabschnitte gebildet, die bei crashbedingten Verformungen im Bereich der Rollkörper derart zur Anlage aneinander gelangen, daß der Fahrzeugsitz noch in seiner Verankerung gehalten wird.

Ergänzend sei noch erwahnt, daß gemäß Fig. 1 jede Führungsschiene 2 über wenigstens einen Teil ihrer Länge hinweg verteilt angeordnete Rastöffnungen 50 aufweist, die mit einer nicht dargestellten, am jeweiligen Trägerelement 32 befestigten Verriegelungseinrichtung zum Arretieren des Fahrzeugsitzes in der jeweiligen Stellposition zusammenwirken. Wie dargestellt, befinden sich die Rastöffnungen 50 insbesondere in der die erste Seitenführungsfläche 16 aufweisenden Profilwandung der jeweiligen Führungsschiene 2.

## Patentansprüche

1. Sitzführung zur Halterung eines Fahrzeugsitzes und zu dessen Positionsverstellung in Richtung einer Verstellachse (A), mit zwei parallel zur Verstellachse (A) angeordneten Führungsschienen (2) sowie mit mit den Führungsschienen (2) relativbeweglich und dabei rollend zusammenwirkenden Trägerrollkörpern (4) zur vertikalen Lastabstützung, wobei ein Ausgleich von seitlichen, zwischen den Führungsschienen (2) auftretenden Maßtoleranzen vorgesehen und zur seitlichen Abstützung in Richtung einer zur Verstellachse (A) und zu den Führungsschienen (2) im wesentlichen senkrecht verlaufenden Querachse (B) Seitenführungsmittel (8) vorgesehen sind, die mit Rollreibung relativbeweglich mit den Führungsschienen (2) zusammenwirken und relativbeweglich und rollend mit den Führungsschienen (2) zusammenwirkende Führungsrollkörper (10) aufweisen, wobei die Trägerrollkörper (4) und die Führungsrollkörper (10) jeweils an einem von zwei am Fahrzeugsitz befestigbaren Trägerelementen (32) gehaltert sind,
**dadurch gekennzeichnet, daß** die Führungsrollkörper (10) über jeweils ein gesondertes, an jedem Trägerelement (32) befestigtes Tragteil (34) gehaltert sind, wobei das Trägerelement (32) derart am Fahrzeugsitz und/oder das Tragteil (34) derart an dem zugehörigen Trägerelement (32) befestigbar ist, daß es bereichsweise zum Ausgleich der seitlichen, zwischen den Führungsschienen (2) auftretenden Maßtoleranzen elastisch verformbar ist.

2. Sitzführung nach Anspruch 1,
**dadurch gekennzeichnet, daß** jeder der beiden Führungsschienen (2) mindestens zwei in Richtung der Verstellachse (A) beabstandete Führungsrollkörper (10) zugeordnet sind.

3. Sitzführung nach Anspruch 2,
**dadurch gekennzeichnet, daß** jeder Führungsrollkörper (10) um eine zur Verstellachse (A) und zur Querachse (B) jeweils etwa senkrechte Rotationsachse (12) drehbar gelagert ist.

4. Sitzführung nach einem der Ansprüche 1 bis 3,
**dadurch gekennzeichnet, daß** die Führungsschienen (2) jeweils als im Querschnitt im wesentlichen C-förmige, auf ihren einander zugekehrten Seiten offene Rechteckprofile ausgebildet sind.

5. Sitzführung nach Anspruch 4,
**dadurch gekennzeichnet, daß** jede Führungsschiene (2) auf ihrer der offenen Seite gegenüberliegenden Innenseite eine erste Seitenführungsfläche (16) sowie vorzugsweise gegenüberliegend eine durch einen auf der offenen Seite abgewinkelten Stegabschnitt (17) gebildete zweite Seitenführungsfläche (18) aufweist.

6. Sitzführung nach einem der Ansprüche 1 bis 5,
**dadurch gekennzeichnet, daß** die Führungsrollkörper (10) in den Führungsschienen (2) jeweils mit einem seitlichen Bewegungsspiel geführt sind.

7. Sitzführung nach einem der Ansprüche 1 bis 6,
**dadurch gekennzeichnet, daß** die Führungsrollkörper (10) als Rollen mit jeweils einem vorzugsweise aus einem elastischen Material bestehenden Laufring (20) ausgebildet sind.

8. Sitzführung nach einem der Ansprüche 1 bis 7,
**dadurch gekennzeichnet, daß** jeder Führungsrollkörper (10) eine leicht ballig ausgebildete Lauffläche aufweist.

9. Sitzführung nach einem der Ansprüche 1 bis 8,
**dadurch gekennzeichnet, daß** die Führungsschienen (2) zur fahrzeugseitig ortsfesten Anordnung vorgesehen sind, während die Trägerrollkörper (4) und die Führungsrollkörper (10) am Fahrzeugsitz befestigbar sind.

10. Sitzführung nach einem der Ansprüche 1 bis 9,
**dadurch gekennzeichnet, daß** die Führungsschienen (2) jeweils eine innenseitige Trägerlauffläche (14) aufweisen, auf denen die Trägerrollkörper (4) aufliegen und abrollen.

11. Sitzführung nach einem der Ansprüche 1 bis 10,
**dadurch gekennzeichnet, daß** jeder der beiden Führungsschienen (2) mindestens zwei in Richtung der Verstellachse (A) beabstandete Trägerrollkörper (4) zugeordnet sind, die um zur Verstellachse (A) senkrechte Rotationsachsen (6) drehbär gelagert sind.

12. Sitzführung nach einem der Ansprüche 1 bis 11,
**gekennzeichnet durch** Ausgleichsmittel (22) zur relativen Abstützung des Sitzes in einer der Richtung der Lastabstützung über die Trägerrollkörper (4) entgegengesetzten Richtung.

13. Sitzführung nach Anspruch 12,
**dadurch gekennzeichnet, daß** die Ausgleichsmittel (22) auf der Seite jeder Führungsschiene (2) mindestens einen Ausgleichsrollkörper (24) zur Auflage und zum Abrollen auf einer der Trägerlauffläche (14) gegenüberliegenden Stützfläche (26) der Führungsschiene (2) aufweisen.

14. Sitzführung nach Anspruch 13,
**dadurch gekennzeichnet, daß** jeder Ausgleichsrollkörper (24) um eine zur Querachse (B) etwa parallele Rotationsachse (28) drehbar gelagert ist.

15. Sitzführung nach Anspruch 13 oder 14,
**dadurch gekennzeichnet, daß** jeder Ausgleichsrollkörper (24) als Rolle mit einem insbesondere aus einem elastischen Material bestehenden Laufring (30) ausgebildet ist.

16. Sitzführung nach einem der Ansprüche 13 bis 15,
**dadurch gekennzeichnet, daß** die Ausgleichsrollkörper (24) jeweils an einem der beiden am Fahrzeugsitz befestigbaren, insbesondere als Blechformteile ausgebildeten Trägerelemente (32) gehaltert sind.

17. Sitzführung nach einem der Ansprüche 1 bis 16,
**dadurch gekennzeichnet, daß** jede Führungsschiene (2) über eine fahrzeugseitig ortsfest montierbare Tragschiene (36) befestigt ist.

18. Sitzführung nach einem der Ansprüche 1 bis 17,
**gekennzeichnet durch** Sicherungsmittel (40) zur direkten Abstützung des Fahrzeugsitzes an ortsfesten Karosserieteilen im Falle von insbesondere crashbedingten Verformungen im Bereich der Rollkörper (4, 10, 24).

19. Sitzführung nach Anspruch 18,
**dadurch gekennzeichnet, daß** als Sicherungsmittel (40) mit Spielabstand ineinandergreifende, stegartige Fangprofilabschnitte der Trägerelemente (32) und/oder der Tragteile (34) einerseits und der Führungsschienen (2) sowie gegebenenfalls der Tragschienen (36) andererseits vorgesehen sind.

20. Sitzführung nach einem der Ansprüche 1 bis 19,
**dadurch gekennzeichnet, daß** jede Führungsschiene (2) über wenigstens einen Teil ihrer Länge hinweg verteilt angeordnete Rastöffnungen (50) zum Zusammenwirken mit einer Verriegelungseinrichtung zum Arretieren des Fahrzeugsitzes in der jeweiligen Stellposition aufweist.

## Claims

1. Seat guide for securing a vehicle seat and for adjusting the position of the latter in the direction of an adjustment axis (A), having two guide rails (2), which are arranged parallel to the adjustment axis (A), and having carrier rolling bodies (4) which interact with the guide rails (2) with relative rolling movement and are intended for vertical load support, it being the case that compensation for lateral dimensional tolerances occurring between the guide rails (2) is envisaged, and provided for lateral support in the direction of a transverse axis (B) which runs essentially perpendicularly to the adjustment axis (A) and to the guide rails (2) are lateral guide means (8) which interact with the guide rails (2) with relative movement, by way of rolling friction, and have guide rolling bodies (10) which interact with the guide rails (2) with relative rolling movement, the carrier rolling bodies (4) and the guide rolling bodies (10) each being secured on one of two carrier elements (32) which can be fastened on the vehicle seat, **characterized in that** the guide rolling bodies (10) are secured via in each case one separate carrying part (34) fastened on each carrier element (32), it being possible for the carrier element (32) to be fastened on the vehicle seat, and/or for the carrying part (34) to be fastened on the associated carrier elemet (32), such that it can be deformed elastically in certain areas in order to compensate for the lateral dimensional tolerances occurring between the guide rails (2).

2. Seat guide according to Claim 1, **characterized in that** each of the two guide rails (2) is assigned at least two guide rolling bodies (10) spaced apart in the direction of the adjustment axis (A).

3. Seat guide according to Claim 2, **characterized in that** each guide rolling body (10) is mounted such that it can be rotated about an axis of rotation (12) which is approximately perpendicular in each case to the adjustment axis (A) and to the transverse axis (B).

4. Seat guide according to one of Claims 1 to 3, **characterized in that** the guide rails (2) are each designed as cross-sectionally essentially C-shaped rectangular profiles which are open on their mutually facing sides.

5. Seat guide according to Claim 4, **characterized in that**, on its inner side located opposite the open side, each guide rail (2) has a first lateral guide surface (16) and, preferably opposite this, a second lateral guide surface (18), which is formed by a crosspiece section (17) which is angled on the open side.

6. Seat guide according to one of Claims 1 to 5, **characterized in that** the guide rolling bodies (10) are guided in the guide rails (2) in each case with lateral movement clearance.

7. Seat guide according to one of Claims 1 to 6, **characterized in that** the guide rolling bodies (10) are designed as rollers each with a race (20) consisting preferably of an elastic material.

8. Seat guide according to one of Claims 1 to 7, **characterized in that** each guide rolling body (10) has a running surface of slightly convex design.

9. Seat guide according to one of Claims 1 to 8, **characterized in that** the guide rails (2) are provided for arranging in a stationary manner on the vehicle, while the carrier rolling bodies (4) and the guide rolling bodies (10) can be fastened on the vehicle seat.

10. Seat guide according to one of Claims 1 to 9, **characterized in that** the guide rails (2) each have an inner carrier running surface (14) on which the carrier rolling bodies (4) rest and roll.

11. Seat guide according to one of Claims 1 to 10, **characterized in that** each of the two guide rails (2) is assigned at least two carrier rolling bodies (4) which are spaced apart in the direction of the adjustment axis (A) and are mounted such that they can be rotated about axes of rotation (6) which are perpendicular to the adjustment axis (A).

12. Seat guide according to one of Claims 1 to 11, **characterized by** compensating means (22) for relative support of the seat in a direction counter to the direction of the load support via the carrier rolling bodies (4).

13. Seat guide according to Claim 12, **characterized in that** the compensating means (22), on the side of each guide rail (2), have at least one compensating rolling body (24) for bearing and for rolling on a supporting surface (26) of the guide rail (2), said supporting surface being located opposite the carrier running surface (14).

14. Seat guide according to Claim 13, **characterized in that** each compensating rolling body (24) is mounted such that it can be rotated about an axis of rotation (28) which is approximately parallel to the transverse axis (B).

15. Seat guide according to Claim 13 or 14, **characterized in that** each compensating rolling body (24) is designed as a roller with a race (30) consisting, in particular, of an elastic material.

16. Seat guide according to one of Claims 13 to 15, **characterized in that** the compensating rolling bodies (24) are each secured on one of the two carrier elements (32) which can be fastened on the vehicle seat and are designed, in particular, as shaped sheet-metal parts.

17. Seat guide according to one of Claims 1 to 16, **characterized in that** each guide rail (2) is fastened via a carrying rail (36) which can be fitted in a stationary manner on the vehicle.

18. Seat guide according to one of Claims 1 to 17, **characterized by** securing means (40) for directly supporting the vehicle seat on stationary bodywork parts in the case of, in particular, crash-induced deformation in the region of the rolling bodies (4, 10, 24).

19. Seat guide according to Claim 18, **characterized in that** the securing means (40) provided are crosspiece-like intercepting-profile sections which interengage with a clearance and belong to the carrier elements (32) and/or the carrying parts (34), on the one hand, and to the guide rails (2) and, if appropriate, the carrying rails (36), on the other hand.

20. Seat guide according to one of Claims 1 to 19, **characterized in that** each guide rail (2) has latching openings (50) which are distributed over at least part of its length and are intended for interacting with a locking device for arresting the vehicle seat in the respective adjustment position.

## Revendications

1. Guidage de siège pour maintenir un siège de véhicule et pour régler sa position dans la direction d'un axe de réglage (A), comprenant deux rails de guidage (2) disposés parallèlement à l'axe de réglage (A) et des galets porteurs (4) coopérant avec les rails de guidage (2) par un déplacement relatif en roulant pour supporter la charge verticale, une compensation de tolérances dimensionnelles latérales se produisant entre les rails de guidage (2) étant prévue, ainsi que, pour le soutien latéral, des moyens de guidage latéral (8) dans la direction d'un axe transversal (B) essentiellement perpendiculaire à l'axe de réglage (A) et aux rails de guidage (2), qui coopèrent avec les rails de guidage (2) par un mouvement relatif avec frottement de roulement et présentent des galets guides (10) coopérant avec les rails de guidage (2) par un mouvement relatif et en roulant, les galets porteurs (4) et les galets guides (10) étant maintenus chacun sur l'un de deux éléments porteurs (32) pouvant être fixés sur le siège du véhicule, **caractérisé en ce que** les galets guides (10) sont maintenus par l'intermédiaire d'une pièce porteuse (34) séparée, fixée sur chaque élément porteur (32), ledit élément porteur (32) pouvant être fixé au siège du véhicule et/ou la pièce porteuse (34) être fixée à l'élément porteur (32) correspondant de telle manière qu'il peut se déformer de manière élastique par endroits pour compenser les tolérances dimensionnelles latérales se produisant entre les rails de guidage (2).

2. Guidage de siège suivant la revendication 1, **caractérisé en ce qu'**à chacun des deux rails de guidage (2) sont affectés au moins deux galets guides (10) avec un écart dans le sens de l'axe de réglage (A).

3. Guidage de siège suivant la revendication 2, **caractérisé en ce que** chaque galet guide (10) est monté de manière à pouvoir tourner autour d'un axe de rotation (12) à peu près perpendiculaire à l'axe de réglage (A) et à l'axe transversal (B).

4. Guidage de siège suivant l'une des revendications 1 à 3, **caractérisé en ce que** chacun des rails de guidage (2) est conçu comme un profilé rectangulaire de section essentiellement en forme de C, ouvert sur la face regardant l'autre rail.

5. Guidage de siège suivant la revendication 4, **caractérisé en ce que** chaque rail de guidage (2) présente une première surface de guidage latéral (16) sur sa face intérieure opposée au côté ouvert, ainsi que, située de préférence à l'opposé, une deuxième surface de guidage (18) formée par un segment de l'âme (17) replié du côté ouvert.

6. Guidage de siège suivant l'une des revendications 1 à 5, **caractérisée en ce que** les galets guides (10) sont guidés dans les rails de guidage (2) chacun avec un jeu de déplacement latéral.

7. Guidage de siège suivant l'une des revendications 1 à 6, **caractérisé en ce que** les galets guides (10) sont conçus comme des roulettes ayant chacune une bague de roulement (20) réalisée de préférence dans une matière élastique.

8. Guidage de siège suivant l'une des revendications 1 à 7, **caractérisé en ce que** chaque galet guide (10) présente une surface de roulement de forme légèrement convexe.

9. Guidage de siège suivant l'une des revendications 1 à 8, **caractérisé en ce que** les rails de guidage (2) sont prévus être placés de manière fixe du côté véhicule, tandis que les galets porteurs (4) et les galets guides (10) peuvent être fixés sur le siège du véhicule.

10. Guidage de siège suivant l'une des revendications 1 à 9, **caractérisé en ce que** les rails de guidage (2) présentent chacun une surface de roulement porteuse intérieure (14), sur laquelle les galets porteurs (4) s'appuient et roulent.

11. Guidage de siège suivant l'une des revendications 1 à 10, **caractérisé en ce que** chacun des deux rails de guidage (2) est affecté d'au moins deux galets porteurs (4) écartés dans le sens de l'axe de réglage (A), qui sont montés de manière à pouvoir tourner autour d'axes de rotation (6) perpendiculaires à l'axe de réglage (A).

12. Guidage de siège suivant l'une des revendications 1 à 11, **caractérisé par** des moyens de compensation (22) pour le support relatif du siège dans une direction opposée à celle du support de charge par les galets porteurs (4).

13. Guidage de siège suivant la revendication 12, **caractérisé en ce que** les moyens de compensation (22) présentent, sur le côté de chaque rail de guidage (2), au moins un galet de compensation (24) qui s'appuie et roule sur une surface d'appui (26) du rail de guidage (2) opposée à la surface de roulement porteuse (14).

14. Guidage de siège suivant la revendication 13, **caractérisé en ce que** chaque galet de compensation (24) est monté de manière à pouvoir tourner autour d'un axe de rotation (28) à peu près parallèle à l'axe transversal (B).

15. Guidage de siège suivant la revendication 13 ou 14, **caractérisé en ce que** chaque galet de compensation (24) est conçu comme une roulette avec une bague de roulement (30) réalisée en particulier dans une matière élastique.

16. Guidage de siège suivant l'une des revendications 13 à 15, **caractérisée en ce que** les galets de compensation (24) sont maintenus chacun à l'un des deux éléments porteurs (32), conçus en particulier comme des pièces formées en tôle, pouvant être fixés au siège du véhicule.

17. Guidage de siège suivant l'une des revendications 1 à 16, **caractérisé en ce que** chaque rail de guidage (2) est fixé par l'intermédiaire d'un rail porteur (36) pouvant être monté de manière fixe côté véhicule.

18. Guidage de siège suivant l'une des revendications 1 à 17, **caractérisé par** des moyens de retenue (40) pour supporter directement le siège du véhicule sur des pièces de carrosserie fixes dans le cas de déformations dans la zone des galets de roulement (4, 10, 24) dues en particulier à des collisions.

19. Guidage de siège suivant la revendication 18, **caractérisé en ce que**, comme moyen de retenue (40), des segments de profilés d'arrêt en forme de rebords sont prévus sur les éléments porteurs (32) et/ou les pièces porteuses (34) d'une part, et les rails de guidage (2) ainsi qu'éventuellement les rails porteurs (36) d'autre part, qui s'emboîtent les uns dans les autres avec un jeu.

20. Guidage de siège suivant l'une des revendications 1 à 19, **caractérisé en ce que** chaque rail de guidage (2) présente des encoches (50) réparties sur au moins une partie de sa longueur et destinées à coopérer avec un dispositif de verrouillage pour bloquer le siège du véhicule dans la position de réglage.
